# EUROPÄISCHE PATENTANMELDUNG

(11) **EP 2 084 976 A1**
(43) Veröffentlichungstag der Anmeldung: **05.08.2009**
(21) Anmeldenummer: 08405026.9
(22) Anmeldetag: 31.01.2008
(51) Int. Cl.: A23N 4/12, A23N 15/00, A47J 25/00

(54) **Vorrichtung zum Bearbeiten eines Gemüsekopfs**

(71) Anmelder: Fresh Food Services GmbH, 8005 Zürich (CH)
(72) Erfinder: Marti, Thomas, 8762 Sool (CH)
(74) Vertreter: Rüfenacht, Philipp Michael

(57) **Zusammenfassung**

Die Erfindung betrifft eine Vorrichtung und ein Verfahren zum Bearbeiten eines Gemüsekopfs (7) wie beispielsweise eines Salatkopfs mit einem Strunk und einem Körper. Der Körper kann dabei beispielsweise durch die essbaren Blätter eines Eisbergsalats gebildet werden. Die erfindungsgemässe Vorrichtung umfasst ein erstes Halteelement (3b) wie eine wendelförmige Schraube zum Halten des Strunks und ein zweites Halteelement (6b) wie einen Niederhalter zum Halten des Körpers. Die Halteelemente (3b, 6b) sind dabei relativ zueinander entlang einer Längsachse verschiebbar. Weiter sind die Halteelemente derart ausgebildet und angeordnet, dass bei einer Relativverschiebung der vom ersten Halteelement (3b) gehaltene Strunk von dem vom zweiten Halteelement (6b) gehaltenen Körper durch Herausreissen getrennt wird.

## Beschreibung

Bei der industriellen Verarbeitung von Gemüseköpfen wie beispielsweise Salat ist es wichtig, dass ein möglichst grosser Anteil des Körpers, also beispielsweise der essbaren Salatblätter, vom ungeniessbaren Strunk (auch Storz, Kern) des Gemüsekopfs abgetrennt wird, um eine möglichst effiziente Verarbeitung der Gemüseköpfe zu erreichen. Aufgrund hoher und immer steigender Personalkosten ist es erstrebenswert, die manuell durchzuführenden Arbeitsschritte zum Entfernen des Strunks aus dem Gemüsekopf durch entsprechende Werkzeuge möglichst zu vereinfachen und darüber hinaus einen möglichst grossen Teil dieser Arbeitsschritte durch Maschinen durchführen zu lassen.

In der WO 2007/069898 (Deiman) wird ein Werkzeug zum manuellen Entfernen des Kerns einer Pflanze beschrieben, wobei das Werkzeug einen rohrförmigen Teil aufweist mit einer kreisförmigen Schnittfläche an einem freien Ende und einem Griff an seinem anderen Ende. Das Werkzeug zeichnet sich dadurch aus, dass die Schnittfläche keinen durchgehenden Kreis, sondern einen Kreisabschnitt, beispielsweise einen Halbkreis, bildet. Auf diese Weise kann mit dem beschriebenen Werkzeug ein Teil der Pflanze von ihrem Kern getrennt werden, während ein anderer Teil der Pflanze mit dem Kern verbunden bleibt und somit auch über eine längere Zeit noch frisch bleibt. Als zu schneidende Pflanzen werden alle Pflanzen mit einem Kern genannt, insbesondere Salat, Gurken, Spinat und süsse Paprika. Der Griffteil ist dabei ebenfalls mit einer Schnittfläche ausgestattet, welche einen durchgehenden Kreis beschreibt und somit den Kern als Ganzes von der Pflanze zu trennen vermag.

Derartige Werkzeuge erfordern eine manuelle Bearbeitung der zu entkernenden Pflanzen. Bei grossen Stückzahlen zu bearbeitender Pflanzen, wie sie bei der industriellen Bearbeitung von Gemüse üblich sind, bedeutet jeder manuelle Bearbeitungsschritt beträchtliche Personalkosten.

Die US 5,421,250 (Société Légumière du Contentin) beschreibt dagegen eine Vorrichtung zum maschinellen Greifen von Salat. Nachdem der Salat aufgenommen wurde, soll er unter anderem einer Putz- und einer Schneidevorrichtung zugeführt werden. Das Greifwerkzeug umfasst dabei erstens zwischen einer ausgefahrenen und einer eingezogenen Position bewegliche Schraubenfedern, welche in ihrer ausgefahrenen Position in den Salat bzw. in den Strunk des Salats eindringen und diesen durch eine Zurückziehbewegung anheben. Zweitens umfasst das Greifwerkzeug bewegliche Haken, welche sich seitlich in den Salat und seinen Strunk bohren, um diesen zu fixieren. Mindestens einer der Haken ist dabei länger als die anderen, so dass zumindest dieser Haken den Salat bis zu dessen Strunk penetrieren kann.

Der Körper des Salats wird bei der Verwendung einer solchen Greifanlage vom Strunk abgeschnitten. Das maschinelle Abschneiden der essbaren Salatblätter ist jedoch wenig effizient. Da die Strünke verschiedener Salatköpfe keine einheitliche Grösse aufweisen müssen, wird der jeweilige Körper meistens nicht optimal vom Strunk entfernt.

### Darstellung der Erfindung

Aufgabe der Erfindung ist es, eine dem eingangs genannten technischen Gebiet zugehörende Vorrichtung zu schaffen, welche ein effizientes Verfahren zum Trennen eines Strunks vom Körper eines Gemüsekopfs durchzuführen vermag.

Die Lösung der Aufgabe ist durch die Merkmale des Anspruchs 1 definiert. Gemäss der Erfindung umfasst eine Vorrichtung ein erstes Halteelement zum Halten des Strunks und ein zweites Halteelement zum Halten des Körpers, wobei die Halteelemente relativ zueinander entlang einer Längsachse verschiebbar und derart ausgebildet und angeordnet sind, dass bei einer Relativverschiebung der vom ersten Halteelement gehaltene Strunk von dem vom zweiten Halteelement gehaltenen Körper getrennt wird.

Die erfindungsgemässe Vorrichtung hat den Vorteil, dass der Körper und der Strunk auf effiziente Weise maschinell voneinander getrennt werden können. Im Gegensatz zu den bekannten Schneidetechniken macht sich die erfindungsgemässe Vorrichtung die - in Bezug auf die erfindungsgemässe Relativbewegung - natürliche Schwäche der Übergangsstellen zwischen dem Strunk und dem Körper des Gemüsekopfs zunutze. So wird im Wesentlichen nur der Strunk aus dem Gemüsekopf entfernt und somit unabhängig von der Grösse des Strunks im Wesentlichen der gesamte geniessbare Körper des Gemüsekopfs zur Weiterverarbeitung vorbereitet. Es hat sich gezeigt, dass sich das erfindungsgemässe Verfahren insbesondere zur Verarbeitung von Eisbergsalat und ähnlichen Salatköpfen eignet.

Bevorzugt ist das erste Halteelement dabei eine Schraube zum Einschrauben in den Strunk. Die Schraube ist dabei um die Längsachse drehbar und besonders bevorzugt entlang der Längsachse verschiebbar. Eine Schraube stellt eine besonders gut zu realisierende Halteeinrichtung dar, die den Strunk des Gemüsekopfs im eingeschraubten Zustand sicher festhält und ein Halten entlang eines grösseren Längenbereichs des Strunks ermöglicht, ohne dass die erfindungsgemässe Trennung zwischen Strunk und Körper behindert wird. Zudem lässt sich der entfernte Strunk einfach wieder von der Schraube lösen, beispielsweise durch Zurückdrehen der Schraube.

Besonders bevorzugt ist die Schraube dabei entlang ihrer Längsachse verschiebbar, insbesondere um die Relativverschiebung zwischen den beiden Halteeinrichtungen zu realisieren. Mit Vorteil ist die Schraube dabei motorgetrieben. Eine motorgetriebene Schraube dient dem Ziel, eine möglichst autark arbeitende Vorrichtung zu schaffen, welche ohne menschliches Eingreifen auskommt. Der Motorantrieb kann sich dabei auf die Drehbewegung der Schraube und/oder auf deren Verschiebung entlang der Längsachse beziehen.

Alternativ zu einer Schraube sind auch andere Realisierungen eines Halteelements denkbar. So kann beispielsweise ein Spiess mit Widerhaken zentral in den Strunk eingeführt werden, der diesen entgegen der Einführungsrichtung festhält. Daneben kann beispielsweise auch ein Stift in den Strunk des Gemüsekopfs eingeführt werden, welcher sich in eingeführtem Zustand dübelartig spreizt und somit eine feste Verbindung mit dem Strunk eingeht.

Mit Vorteil ist die Schraube dabei wendelförmig ausgebildet. Eine solche korkenzieherähnliche Schraube hält den zu entfernenden Strunk durch ihre charakteristische Form besonders fest.

Alternativ kann die Schraube auch anders als wendelförmig, beispielsweise gewindeförmig, ausgeführt sein. Eine Gewindeschraube kann den Strunk des Gemüsekopfs jedoch unter Umständen nicht mit der gleichen Kraft festhalten wie eine Wendelschraube bzw. bricht den Strunk selbst teilweise auf, was zu Stabilitätseinbussen führen kann.

Bevorzugt ist das zweite Halteelement durch eine Auflagefläche gebildet, welche das erste Halteelement ringförmig umgibt. Die Auflagefläche ist dazu geeignet, den Gemüsekopf entlang der Längsachse zumindest in einer Richtung zu fixieren und/oder zu bewegen, indem sie gegen den Körper des Gemüsekopfs in Richtung der Längsachse gedrückt wird. Eine grosse Auflagefläche wirkt auf den Körper des Gemüsekopfs dabei im Vergleich zu kleinflächigen Halteelementen schonender, da eine grosse Auflagefläche die auf den Körper ausgeübte Kraft breit verteilt und damit zu einer geringen Druckbelastung des Körpers führt. Dadurch kann die Trennbewegung des Strunks bezüglich des Körpers unterstützt werden.

Alternativ oder zusätzlich zu einer Auflagefläche können andere Halteelemente vorgesehen sein, die den Körper festhalten. Beispiele hierfür sind Greifarme, die sich beispielsweise seitlich in den Körper des Gemüsekopfs bohren lassen und welche nicht bis in den Strunk vordringen. Daneben ist es beispielsweise auch möglich, den Körper einzuklemmen oder durch Zangen zu fixieren. Es können dabei auch verschiedene gleich oder unterschiedlich wirkende Halteelemente miteinander kombiniert werden.

Mit Vorteil umfasst das zweite Halteelement Haltestifte zum Eindringen in den Körper des Gemüsekopfs. Derartige Haltestifte können den Körper bei geschickter Positionierung und Eindringrichtung bzw. Eindringbewegung gegenüber verschiedenen Bewegungen festhalten. Es ist dabei möglich, den Körper sowohl gegen eine Verschiebebewegung als auch gegenüber einer Drehbewegung zu fixieren bzw. solche Bewegungen durch das Halteelement auf den Körper zu übertragen. Es ist insbesondere möglich, für das zweite Halteelement eine Auflagefläche mit Haltestiften zu kombinieren.

Das zweite Halteelement kann neben oder an Stelle von Haltestiften auch andere Befestigungsmittel umfassen. Die Haltestifte müssen auch nicht in den Köper des Gemüsekopfs eindringen, sondern können diesen auch von aussen durch Aufpressen auf dessen Oberfläche halten.

In einer bevorzugten Ausführungsform fixiert das zweite Halteelement den Körper des Gemüsekopfs bezüglich einer Rotation um die Längsachse. Dies ist beispielsweise durch Einklemmen des Körpers oder durch in den Körper eindringende Haltestifte, Zangen oder Schrauben realisierbar. Eine derartige Ausführungsform hat den Vorteil, dass der Gemüsekopf besser kontrollierbar und positionierbar ist. Insbesondere kann eine Schraube, welche als erstes Halteelement vorgesehen sein kann, besser in den Strunk eines gegen Rotation gesicherten Gemüsekopfs eingebohrt werden.

Alternativ kann auch darauf verzichtet werden, dass der Körper des Gemüsekopfs durch das zweite Halteelement gegen eine Rotation um die Längsachse fixierbar ist. Es ist beispielsweise möglich, dass der Gemüsekopf durch ein anderes Element, beispielsweise eine separate Positioniereinrichtung, gegen eine derartige Rotation gesichert ist. Daneben ist es je nach Ausführung des ersten Halteelements gar nicht zwingend nötig, den Gemüsekopf gegen Rotationsbewegungen zu sichern.

Mit Vorteil ist das zweite Halteelement entlang der Längsachse verschiebbar. Ein derartig ausgeführtes zweites Halteelement ermöglicht eine Relativverschiebung zwischen dem ersten Halteelement und dem zweiten Halteelement, ohne dass das erste Halteelement dabei entlang der Längsachse verschiebbar sein muss. Darüber hinaus kann das zweite Halteelement in dieser Ausführungsform auf eine einstellbare Position entlang der Längsachse verfahren werden und den Körper des Gemüsekopfs an einer so festlegbaren Stelle greifen bzw. sich in seiner Position der Grösse des Gemüsekopfs anpassen.

Alternativ ist auch denkbar, dass das zweite Halteelement nicht entlang der Längsachse beweglich ausgeführt ist. Dabei ist beispielsweise möglich, dass das zweite Halteelement unbeweglich ist oder nur in andere Richtungen verschoben werden kann.

Mit Vorteil umfasst die Vorrichtung weiter eine Bewegungseinheit zum Positionieren und Ausrichten des Gemüsekopfs. Eine solche Bewegungseinheit erlaubt es, den Gemüsekopf automatisch in der Vorrichtung zu handhaben, ohne dass dabei ein menschliches Eingreifen nötig ist. Die Bewegungseinheit führt dabei insbesondere das Zentrieren des Gemüsekopfs unter dem ersten Halteelement und das Ausrichten des Strunks in einer vertikalen und dem ersten Halteelement zugewandten Ausrichtung aus. Bei einem Gemüsekopf, dessen Strunk vertikal und dem ersten Halteelement entgegen ausgerichtet ist, kann das erste Halteelement den Strunk direkt halten und der Strunk durch die vertikale Relativverschiebung zwischen dem ersten und dem zweiten Halteelement entfernt werden.

Alternativ ist es möglich, dass der Gemüsekopf beispielsweise von Hand positioniert und ausgerichtet oder einer dieser beiden Schritte von Hand und der andere durch eine entsprechende Bewegungseinheit vorgenommen wird.

Es hat sich gezeigt, dass bei gewissen Gemüsesorten, z. B. bei Eisbergsalat, der Trennvorgang zwischen Strunk und Körper verbessert werden kann, wenn vor diesem Vorgang eine Schlagbewegung auf den Strunk ausgeführt wird. Bevorzugt umfasst die Vorrichtung deshalb weiter ein Schlagelement zum Schlagen auf den Strunk. Ein derartiges Schlagelement kann beispielsweise durch einen Stab, einen Schlägel, einen Bolzen oder ein ähnliches Element gebildet sein. Durch ein solches Schlagelement vermag die Vorrichtung vor dem Entfernen des Strunks automatisiert und systematisch den Gemüsekopf für den anschliessenden Trennvorgang vorzubereiten.

Alternativ kann auf eine derartige Vorrichtung verzichtet werden. Ein Schlagen auf den Strunk des Gemüsekopfs kann auch von Hand oder maschinell in einem früheren Verarbeitungsstadium erfolgen.

In einer anderen bevorzugten Ausführungsform umfasst die Vorrichtung ein Schneidelement, welches derart angeordnet ist, dass es beim Halten des Strunks durch das erste Halteelement den äussersten Teil des Körpers vom Strunk abtrennen kann. Ein solches Schneidelement kann beispielsweise durch ein das Halteelement umgebendes Rundmesser gebildet sein, welches die äusserste Schicht des Körpers in einem an die Schnittfläche des Strunks anschliessenden Bereich des Strunks vom Strunk abtrennt. Ein solches Ausschneiden betrifft den äussersten Teil des Körpers, der sich je nach Gemüseart durch besonders dicke und schwer herauszureissende Blätter auszeichnen kann.

Alternativ kann auch darauf verzichtet werden, ein solches Schneidelement zu verwenden. Insbesondere hängt es von der Art des zu bearbeitenden Gemüsekopfs ab, ob es sinnvoll ist, ein Schneidelement, ein Schlagelement, beides oder keins dieser Elemente vorzusehen.

In einer bevorzugten Ausführungsform ist das erste Halteelement zentral über einer Positioniereinrichtung für den Gemüsekopf vorgesehen und weist eine vertikal ausgerichtete Längsachse auf. Das erste Halteelement ist entlang der Längsachse verschiebbar. Weiter befindet sich das zweite Halteelement ebenfalls über der Positioniereinrichtung und ist ebenfalls parallel zur Längsachse verschiebbar. Die Positioniereinrichtung trägt dabei mit Vorteil den zu bearbeitenden Gemüsekopf, so dass sowohl das erste Halteelement als auch das zweite Halteelement oberhalb des Gemüsekopfs, der Positioniereinrichtung in Bezug auf den Gemüsekopf gegenüber angeordnet sind. Bei einer Ausführungsform des zweiten Halteelements als Auflagefläche kann somit durch ein relatives Zurückziehen des ersten, in den Strunk des Gemüsekopfs eingebohrten Halteelements der Strunk vom Körper getrennt werden, während der Körper des Gemüsekopfs von der Auflagefläche zurückgehalten ist.

Alternativ können die Halteelemente auch anders arrangiert sein. Je nach Ausführungsform der Halteelemente müssen diese nicht auf der gleichen Seite des Gemüsekopfs wirken, sondern können von verschiedenen Seiten auf den Gemüsekopf einwirken.

Die beanspruchte Vorrichtung eignet sich dazu, ein erfindungsgemässes Verfahren zum Trennen eines Strunks eines Gemüsekopfs von einem Körper des Gemüsekopfs durchzuführen. Das Verfahren umfasst dabei das Festhalten des Strunks des Gemüsekopfs durch ein erstes Halteelement, das Festhalten des Körpers des Gemüsekopfs durch ein zweites Halteelement und das Verschieben der Halteelemente relativ zueinander, wobei der Strunk vom Körper getrennt wird. Ein derartiges Verfahren trennt den Strunk vom Körper eines Salatkopfs auf besonders effiziente Weise, da es die - in Bezug auf die erfindungsgemässe Relativbewegung - natürliche Schwäche der Übergangsstellen zwischen dem Strunk und dem Körper eines Gemüsekopfs ausnutzt. Der Strunk wird dabei möglichst längs seiner Ausrichtung aus dem Gemüsekopf herausgerissen und damit vom Körper des Gemüsekopfs getrennt. Der Strunk ist dabei üblicherweise radial von der Oberfläche des Gemüsekopfs auf dessen Mittelpunkt zu ausgerichtet. Beim relativen Verschieben der Halteelemente gegeneinander ist es im Allgemeinen ohne Bedeutung, ob sich das erste oder das zweite Halteelement oder beide Halteelemente tatsächlich bewegen, solange eine Spannung zwischen dem Körper des Gemüsekopfs und dem Strunk aufgebaut wird, welche schliesslich zum Brechen der Übergangsstellen zwischen dem Strunk und dem Körper des Gemüsekopfs führt.

Bevorzugt umfasst das Verfahren ein Aufsetzen einer Schraube auf den im Wesentlichen entlang einer Längsachse ausgerichteten Strunk des Gemüsekopfs und ein anschliessendes Einbohren der Schraube in den Strunk. Weiter umfasst es ein Fixieren des Körpers des Gemüsekopfs durch das zweite Halteelement, welches bevorzugt durch eine Auflagefläche, besonders bevorzugt eine Auflagefläche mit Haltestiften gebildet wird. Schliesslich umfasst das Verfahren ein Durchführen einer Relativbewegung der Halteelemente gegeneinander entlang der Längsachse, wobei der Strunk aus dem Körper gerissen wird. Durch diese Schritte kann der Strunk des Gemüsekopfs besonders leicht und effizient, das bedeutet ohne unnötige Verluste von Teilen des Körpers, vom Körper des Gemüsekopfs getrennt werden. Das beanspruchte Verfahren ist darüber hinaus sehr gut maschinell durchführbar.

Alternativ können die allgemeinen Verfahrensschritte Festhalten des Strunks, Festhalten des Körpers und relatives Bewegen der beiden Teile gegeneinander auch anders realisiert werden. Das Festhalten des Strunks bzw. des Körpers des Gemüsekopfs beispielsweise durch andere Halteelemente, wie Spreizstifte oder Zangen bewirkt werden.

Mit Vorteil umfasst das erfindungsgemässe Verfahren noch einen weiteren Schritt, der vor dem relativen Verschieben der Halteelemente gegeneinander durchgeführt wird, nämlich ein Schlagen auf den Strunk. Durch das vorgängige Schlagen auf den Strunk kann dieser später leichter vom Körper des Gemüsekopfs getrennt werden als dies ohne diesen Verfahrensschritt möglich ist.

Alternativ kann aber auch darauf verzichtet werden, vorgängig auf den Strunk zu schlagen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine Vorderansicht eines erfindungsgemässen Stunkbohrers in Arbeitsstellung; und
- Fig. 2: eine Detailansicht eines erfindungsgemässen Bohrkopfs;

Grundsätzlich sind in den Figuren gleiche Teile mit gleichen Bezugszeichen versehen.

### Wege zur Ausführung der Erfindung

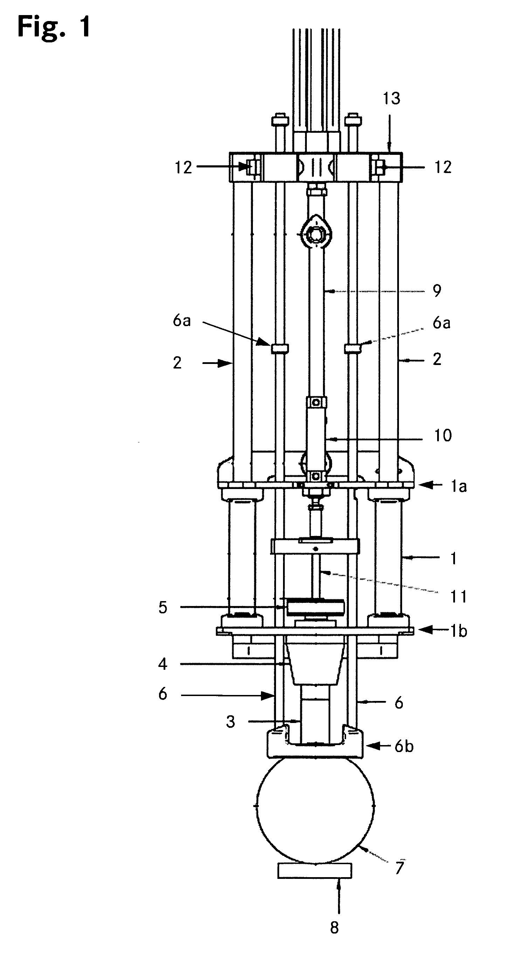

Figur 1 zeigt eine Vorderansicht eines erfindungsgemässen Strunkbohrers. Auf einer Positioniereinrichtung 8, die einen Gemüseträger bildet, ist ein Gemüsekopf 7, beispielsweise ein Salatkopf, positioniert. Die Positioniereinrichtung 8 verschiebt den Gemüsekopf 7 dabei in einer horizontalen Ebene derart, dass der zu entfernende Strunk zentral unter einem Bohrkopf 3 positioniert wird.

Der zylinderförmige Bohrkopf 3 ist via ein Bohrwellenlager 4 an einem Hubschlitten 1 gelagert, wobei der Hubschlitten 1 entlang zwei Laufschienen 2 in einer vertikalen Richtung verfahrbar ist. Der Hubschlitten 1 umfasst zwei rohrförmige Ummantelungen der Laufschienen 2, wobei je eine Ummantelung eine Laufschiene 2 umgibt, und eine im Wesentlichen horizontal orientierte obere und eine untere Verbindungsplatte 1a, 1b, welche die beiden Ummantelungen miteinander verbinden. An dem Hubschlitten 1 sind neben dem Bohrkopf 3 noch weitere Elemente zum Betrieb des Bohrkopfs 3 gelagert. Dabei handelt es sich um das von seinem unteren Ende sich kegelförmig in seinem Durchmesser erweiternde Bohrwellenlager 4 und einen Bohrkopfantrieb 5. Der Bohrkopfantrieb 5 und das Bohrwellenlager 4 sind auf einer Achse mit dem Bohrkopf 3 zentral über der Positioniereinrichtung 8 angebracht. Der Bohrkopf 3 ist im Bohrwellenlager 4 gelagert und ragt vertikal nach unten über das Bohrwellenlager 4 hinaus. Er ist somit unterhalb der unteren Verbindungsplatte 1b mittig zwischen den Laufschienen 2 angeordnet. Der Bohrkopfantrieb 5 ist auf der Oberseite der Verbindungsplatte 1 b angeordnet.

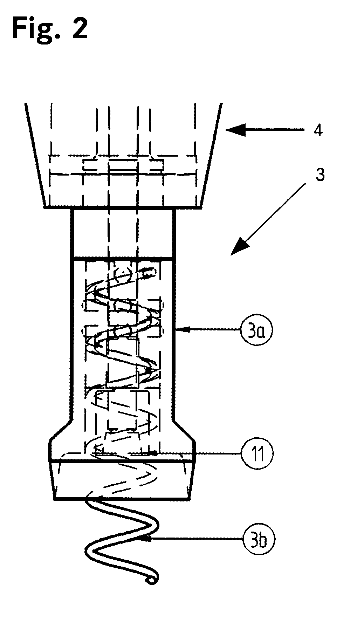

Ein Auswerferbolzen 11 ist wiederum oberhalb des Bohrkopfantriebs 11 angeordnet, in derselben Achse verlaufend, in der auch der Bohrkopf 3, das Bohrwellenlager 4 und der Bohrkopfantrieb 5 liegen. Der Auswerferbolzen 11 läuft zentral durch den Bohrkopfantrieb 5, das Bohrwellenlager 4 und den Bohrkopf 3 selbst, wie in Figur 2 deutlicher dargestellt ist. Angetrieben wird der Auswerferbolzen 11 durch einen Auswerferantrieb 10, welcher auf der Oberseite der oberen Verbindungsplatte 1a des Hubschlittens 1 befestigt ist. Der Auswerferantrieb 10 ist durch einen pneumatischen Zylinder gebildet, wobei der zu diesem Zylinder zugehörige Kolben direkt mit dem Auswerferbolzen 11 verbunden ist und diesen somit in vertikaler Richtung bewegen kann bzw. wobei der zugehörige Kolben direkt den Auswerferbolzen 11 selbst bildet. Auch der Auswerferantrieb 10 verläuft wieder in derselben Achse wie der Auswerferbolzen 11.

Der Hubschlitten 1 wird durch einen Arbeitshubantrieb 9 entlang der Laufschienen 2 vertikal verfahren. Der Arbeitshubantrieb 9 ist wiederum durch einen pneumatischen Zylinder gebildet. Dieser erstreckt sich von der Oberseite der Grundplatte 13 nach oben. Durch Pressluft wird der Kolben des Arbeitshubantriebs 9 ein- und ausgefahren und damit der mit dem freien Ende des Kolbens fest verbundene Hubschlitten 1 bezüglich der Grundplatte 13 angehoben und abgesenkt. Der Hubschlitten wird dabei durch die Laufschienen 2 in seiner linearen Vertikalbewegung geführt. Auch der Arbeitshubantrieb 9 befindet sich auf derselben Achse wie der Bohrkopf 3, das Bohrwellenlager 4, der Bohrkopfantrieb 5, der Auswerferbolzen 11 und der Auswerferantrieb 10. Die Grundplatte 13 bildet neben der Halterung für den Arbeitshubantrieb 9 gleichzeitig eine Verankerung für die Laufschienen 2, welche sich vertikal von der Grundplatte 13 aus nach unten erstrecken. Die Laufschienen 2 sind an deren unteren Ende stirnseitig mit einem Verbindungsstück verbunden, welches diese stabil und präzise zueinander ausrichtet. Die Längen der Laufschienen 2 und des Arbeitshubantriebs 9 sind so gewählt, dass der Hubschlitten 1 bei vollständig ausgefahrenem Arbeitshubantrieb 9 mit seiner unteren Verbindungsplatte 1b das Ende der Laufschienen 2 erreicht und nicht durch das Verbindungsstück der Laufschienen behindert wird.

Weiter ist an dem Hubschlitten 1 ein Halteelement für den Gemüsekopf 7 in Form eines Niederhalters 6b gelagert, welcher über weitere Führungsschienen 6 geführt wird. Die Führungsschienen 6 verlaufen dabei parallel zu den Laufschienen 2 des Hubschlittens 1 und dem Arbeitshubantrieb 9. Sie sind etwa mittig zwischen den Laufschienen 2 und dem Arbeitshubantrieb 9 angeordnet und verlaufen von unterhalb der unteren Verbindungsplatte 1b des Hubschlittens 1 durch den Hubschlitten 1 und die obere Verbindungsplatte 1a weiter über die gesamte Länge der Vorrichtung bis durch die Grundplatte 13 an deren oberen Ende. Die Führungsschienen 6 werden dabei ihrerseits durch Ausnehmungen in den Verbindungsplatten 1a, 1b in ihrer Ausrichtung stabilisiert. Der stirnseitig am unteren Ende der Führungsschienen 6 angebrachte Niederhalter 6b ist ringförmig ausgeführt und bezüglich der Achse, auf der unter anderem der Bohrkopf 3 liegt, konzentrisch. Der Niederhalter 6b verbindet die beiden Führungsschienen 6 stirnseitig miteinander an deren unteren Ende und ist durch die Führungsschienen 6 vertikal verfahrbar. Der Niederhalter 6b weist an seiner Unterseite eine Auflagefläche auf, welche von oben auf den Gemüsekopf 7 gedrückt werden kann. Der Bereich, den der ringförmige Niederhalter 6b umgibt, ist so bemessen, dass der Bohrkopf 3 und gegebenenfalls auch das Bohrwellenlager 4 nicht durch den Niederhalter 6b in ihrer vertikalen Bewegungsfreiheit behindert werden. Die Ausmasse des Niederhalters 6b, insbesondere dessen Innendurchmesser, sind zudem so gewählt, dass der Niederhalter 6b auf einen Gemüsekopf aufgesetzt werden kann. Der Innendurchmesser des Niederhalters 6b ist also auf jeden Fall kleiner als der maximale Durchmesser des kleinsten zu bearbeitenden Gemüsekopfs 7.

Der Niederhalter 6b ist gegenüber dem Hubschlitten 1 federbelastet. Die Federkraft drückt den Niederhalter 6b dabei relativ zum Hubschlitten 1 nach unten. Wenn der Niederhalter 6b, beispielsweise durch einen Gemüsekopf 7, nicht weiter nach unten bewegt werden kann, spannt das Federelement und drückt den Gemüsekopf 7 damit mit der Federkraft, gegen die Positioniereinrichtung 8. Die Führungsschienen 6 des Niederhalters 6b können zudem durch eine Niederhalterklemmung 12 an der Grundplatte 13 und somit bezüglich der Positioniereinrichtung 8 und damit bezüglich des Gemüsekopfs 7 fixiert werden. Dies ermöglicht, dass der Niederhalter 6b auf diese Weise den Gemüsekopf 7 festhalten kann, während der Bohrkopf 3 in den Strunk eingebohrt wird und diesen herausreisst. Die Niederhalterklemmung 12 kann, beispielsweise zum Zurückfahren der Vorrichtung in eine Grundposition, wieder gelöst werden, sodass der Niederhalter 6b durch das Federelement wieder bewegbar ist.

Oberhalb des Hubschlittens 1 befindet sich an den Führungsschienen 6 noch je eine Bohrtiefe-Messeinrichtung 6a. Die Bohrtiefe-Messeinrichtung 6a wird durch je einen auf jeder Führungsschiene 6 befestigten Ring gebildet. Die vertikale Position des Rings wird von einem Sensor erfasst, wodurch auf die Position des Niederhalters 6b und damit indirekt auf die Grösse des zu bearbeitenden Gemüsekopfs 7 geschlossen werden kann. Die Position der Bohrtiefe-Messeinrichtung 6a und damit die gewünschte Bohrtiefe lassen sich dabei einstellen, indem der Ring auf der Führungsschiene 6 verschoben wird.

Im Betrieb befindet sich die Vorrichtung zunächst in einer Grundposition, in der der Hubschlitten 1 entlang der Laufschienen 2 durch den Arbeitshubantrieb 9 ganz nach oben verfahren ist. Der am Hubschlitten 1 befestigte Niederhalter 6b ist durch die Federkraft entlang der Führungsschienen 6 maximal nach unten ausgefahren. Nun wird ein zu bearbeitender Gemüsekopf 7 auf die Positioniereinrichtung 8 aufgelegt und in eine bearbeitungsfähige Lage gebracht. In dieser bearbeitungsfähigen Lage zeigt der Strunk des Gemüsekopfs vertikal nach oben. Anschliessend fährt der Arbeitshubantrieb den Hubschlitten 1 samt dem darauf gelagerten Niederhalter 6b nach unten. Sobald der Niederhalter 6b auf dem Gemüsekopf 7 auftrifft, wird der Niederhalter relativ zum Hubschlitten 1 nach oben gedrückt, da der Hubschlitten 1 weiter nach unten verfährt. Dabei spannt sich das Federelement und die Federkraft, mit der der Niederhalter 6b auf den Gemüsekopf 7 gedrückt wird, nimmt entsprechend der Charakteristik des Federelements zu. Da sich die Führungsschienen 6 und damit die Bohrtiefe-Messeinrichtung 6a nicht mehr weiter bewegen, kann durch Auswertung der durch einen Sensor erfassten Position der Bohrtiefe-Messeinrichtung 6a die Zielposition für den Hubschlitten 1 bestimmt werden. Der Hubschlitten verfährt mit hoher Geschwindigkeit bis zu dieser Position, wobei das vordere, freie Ende des Bohrkopfs 3 auf dem Strunk des Gemüsekopfs 7 auftrifft. Anschliessend wird die Niederhalterklemmung 12 aktiviert und somit der Druck des Niederhalters 6b auf den Gemüsekopf 7 beibehalten.

Der Bohrkopf 3 wird in der Figur 2 detaillierter dargestellt. Der Bohrkopf 3 umfasst eine Schraube 3b und ein diese Schraube 3b zylinderförmig ummantelndes Strunkmesser 3a. Das Strunkmesser 3a schliesst sich direkt an das Gehäuse der Bohrwellenlagerung 4 an. An einen von oben nach unten gesehen zunächst gleichmässig zylindrischen Teil des Strunkmessers 3a schliesst sich in Höhe des unteren Viertels des Strunkmessers 3a eine Vergrösserung des Durchmessers des Strunkmessers 3a an, welche schliesslich wieder in eine Verjüngung mündet. Am unteren Ende des Strunkmessers 3a befindet sich eine kreisringförmige Klinge.

Im Innern des Strunkmessers 3a verläuft unter anderem die Schraube 3b, welche wendelförmig wie eine Korkenzieherschraube ausgeführt ist. Die Schraube 3b lässt sich um ihre Längsachse rotieren. Der Durchmesser der Schraube 3b ist dabei auf den Innendurchmesser des Strunkmessers 3a so abgestimmt, dass sich die Schraube im Innern des Strunkmessers 3a frei drehen und entlang ihrer Längsachse verschieben lässt. Im Innern des Strunkmessers 3a sind die durch das Strunkmesser eigentlich verdeckte Schraube 3b wie auch die Innenwand des Strunkmessers 3a und der Auswerferbolzen 11 in Figur 2 gestrichelt gezeichnet.

Der Auswerferbolzen 11 befindet sich seinerseits im Innern des von der Schraube 3a gebildeten Zylindermantels und verläuft entlang der Längsachse der Schraube 3a. Der von der Schraube 3a gebildete Zylindermantel ist dabei durch den wendelförmigen Verlauf der Schraube 3a definiert. Die Schraube 3a umschliesst somit einen zylinderförmigen Raum in ihrer Mitte, in dem sich der Auswerferbolzen 11 bewegen lässt. Der Auswerferbolzen 11 weist an seinem unteren Ende vier nicht eingezeichnete Haltestifte oder Haltenägel auf, welche die Fixierung des Strunks bezüglich einer Rotationsbewegung ermöglichen.

Die Schraube 3b ist innerhalb des Strunkmessers 3a entlang ihrer Längsachse verfahrbar und rotierbar und der Auswerferbolzen 11 ist innerhalb der Schraube 3a und damit auch innerhalb des Strunkmessers 3a entlang seiner Längsachse verfahrbar. Der Auswerferbolzen ist dabei starr gegenüber Rotationen um seine Längsachse ausgeführt, steht damit aber nicht einer Rotation der Schraube 3b entgegen. Der Antrieb des Auswerferbolzens 11 wie auch der Antrieb der Schraube 3b sind in Figur 1 als Auswerferantrieb 10 und Bohrkopfantrieb 5 dargestellt.

Im Betrieb der Vorrichtung wird die Schraube 3b in Rotation versetzt, bevor der Hubschlitten 1 den Bohrkopf 3 auf den Strunk des Gemüsekopfs 7 aufsetzen kann. Beim Aufsetzen des Hubschlittens 1 auf den Strunk des Gemüsekopfs 7 erfährt der Strunk einen leichten Schlag durch den Bohrkopf 3. Die Schraube 3b bohrt sich wie ein Korkenzieher in den Strunk des Gemüsekopfs 7 ein, wobei der Gemüsekopf 7 durch den Niederhalter 6b fixiert und damit an einem Mitdrehen gehindert ist. Gleichzeitig mit dem Einbohren der Schraube 3b in den Strunk des Gemüsekopfs 7 werden die äussersten Blätter des Gemüsekopfs 7, welche anschliessend an die Schnittfläche des Strunks mit diesem verbunden sind, durch das Strunkmesser 3a vom Strunk abgeschnitten. Sobald die Schraube 3b in den Strunk des Gemüsekopfs 7 eingeschraubt ist und diesen festhält, wird die Rotation der Schraube 3b gestoppt. Danach wird der Hubschlitten 1 samt dem darauf angebrachten Bohrkopf 3 durch den Arbeitshubantrieb 9 nach oben verfahren, wogegen der Niederhalter 6b durch die Niederhalterklemmung 12 in Position gehalten wird und den Gemüsekopf 7 festhält. Durch diese Relativbewegung zwischen der Schraube 3b und dem Niederhalter 6b wird der an der Schraube 3b gehaltene Strunk aus dem vom Niederhalter 6b festgehaltenen Körper des Gemüsekopfs 7 herausgerissen und damit von diesem getrennt.

Der an der Schraube 3b festgehaltene Strunk wird, nachdem die Vorrichtung in ihre Grundposition zurückgekehrt ist, von der Schraube 3b entfernt, indem die Schraube 3b im der Einbohrrichtung entgegen gesetzten Drehsinn rotiert wird, während gleichzeitig der Auswerferbolzen 11 den in der Schraube 3b befindlichen Strunk aus der Schraube 3b herausdrückt. Die stirnseitig auf dem Auswerferbolzen befestigten Haltestifte verhindern dabei, dass der Strunk mit der Schraube 3b mitdreht. Damit wird das Herausschrauben des Strunks aus der Schraube 3b ermöglicht. Eine nicht eingezeichnete Pressluftdüse, welche unterhalb des Bohrkopfs 3 seitlich angeordnet ist, sorgt dafür, dass der Strunk nicht auf den Gemüsekopf 7 zurückfällt, sondern zur Seite weggeblasen wird.

Die Beschreibung basiert auf einer Vorrichtung, bei der die Längsachse vertikal ausgerichtet ist. Eine solche Vorrichtung kann aber auch andere Ausrichtungen einnehmen, womit sich die relativen Positionen der beschriebenen Elemente ebenfalls entsprechend verändern.

Weiter kann der Niederhalter 6b beispielsweise anders als ringförmig ausgeführt sein. Es ist beispielsweise auch möglich, dass er zusätzlich zu einer ringförmigen Auflagefläche Haltestifte aufweist, die analog zu den auf dem Auswerferbolzen 11 befindlichen Haltestiften ausgebildet sein können. Solche Haltestifte können in einer anderen Ausführungsform auch allein zum Halten des Gemüsekopfs 7 vorgesehen sein, ohne dass eine durchgehende Auflagefläche beim Niederhalter 6b vorgesehen ist.

In den Figuren 1 und 2 nicht gezeigt ist ein zusätzlicher Schlägel, ein Hammer oder ein ähnlich geartetes Schlagelement, welches vor dem Bohrvorgang auf den Strunk des Gemüsekopfs 7 schlägt. Je nach Gemüsesorte kann es von Vorteil sein, ein solches Schlagelement vorzusehen oder ein Strunkmesser 3a zu verwenden. Es ist auch denkbar, dass beide Elemente (oder keines der Elemente) Verwendung finden. Dies hängt insbesondere von der Art des zu bearbeitenden Gemüsekopfs 7 ab.

Die Antriebe des Hubschlittens 1 und des Auswerferbolzens 11 können auch anders als pneumatisch betrieben werden. Es ist beispielsweise möglich, einen hydraulischen Antrieb oder auch einen Zahnstangenantrieb einzusetzen. Auch die Bewegung des Niederhalters 6b über die Führungsschienen 6 kann abgewandelt werden. Hierzu ist es beispielsweise denkbar, dass der Niederhalter durch einen separaten Antrieb relativ zum Hubschlitten 1 bewegt wird. Auch ist denkbar, dass der Niederhalter keinen separaten Antrieb aufweist, sondern einzig auf Grund der Schwerkraft auf den Gemüsekopf 7 auftrifft.

Auch das Führungssystem, welches in der hier beschriebenen Ausführungsform ein Gestänge aus Laufschienen 2, Führungsschienen 6, Arbeitshubantrieb 9 und Auswerferantrieb 10 umfasst, kann anders als in der beschriebenen Ausführungsform realisiert werden.

Zusammenfassend ist festzustellen, dass durch die Erfindung eine Vorrichtung geschaffen wird, welche ein effizientes Verfahren zum Trennen eines Strunks vom Körper eines Gemüsekopfs durchzuführen vermag.

## Patentansprüche

1. Vorrichtung zum Bearbeiten eines Gemüsekopfs (7) mit einem Strunk und einem Körper, insbesondere eines Salatkopfs, umfassend ein erstes Halteelement (3b) zum Halten des Strunks und ein zweites Halteelement (6b) zum Halten des Körpers, wobei die Halteelemente (3b, 6b) relativ zueinander entlang einer Längsachse verschiebbar und derart ausgebildet und angeordnet sind, dass bei einer Relativverschiebung der vom ersten Halteelement (3b) gehaltene Strunk von dem vom zweiten Halteelement (6b) gehaltenen Körper getrennt wird.

2. Vorrichtung nach Anspruch 1, **dadurch gekennzeichnet, dass** das erste Halteelement (3b) eine Schraube zum Einschrauben in den Strunk ist, wobei die Schraube (3b) um die Längsachse drehbar ist und wobei die Schraube (3b) bevorzugt entlang der Längsachse verschiebbar ist.

3. Vorrichtung nach Anspruch 2, **dadurch gekennzeichnet, dass** die Schraube (3b) wendelförmig ist.

4. Vorrichtung nach einem der Ansprüche 1 bis 3, **dadurch gekennzeichnet, dass** das zweite Halteelement (6b) eine Auflagefläche ist, welche das erste Halteelement (3b) ringförmig umgibt.

5. Vorrichtung nach einem der Ansprüche 1 bis 4, **dadurch gekennzeichnet, dass** das zweite Halteelement (6b) Haltestifte zum Eindringen in den Körper umfasst.

6. Vorrichtung nach einem der Ansprüche 1 bis 5, **dadurch gekennzeichnet, dass** das zweite Halteelement (6b) den Körper bezüglich einer Rotation um die Längsachse fixiert.

7. Vorrichtung nach einem der Ansprüche 1 bis 6, **dadurch gekennzeichnet, dass** das zweite Halteelement (6b) entlang der Längsachse verschiebbar ist.

8. Vorrichtung nach einem der Ansprüche 1 bis 7, **dadurch gekennzeichnet, dass** sie eine Bewegungseinheit (8) zum Positionieren und Ausrichten des Gemüsekopfs (7) umfasst.

9. Vorrichtung nach einem der Ansprüche 1 bis 8, **dadurch gekennzeichnet, dass** sie ein Schlagelement zum Schlagen auf den Strunk umfasst.

10. Vorrichtung nach einem der Ansprüche 1 bis 9, **dadurch gekennzeichnet, dass** sie ein Schneidelement (3a) umfasst, welches derart angeordnet ist, dass es beim Halten des Strunks durch das erste Halteelement (3b) einen äussersten Teil des Körpers vom Strunk abtrennen kann.

11. Vorrichtung nach einem der Ansprüche 1 bis 10, **dadurch gekennzeichnet, dass** das erste Halteelement (3b) zentral über einer Positioniereinrichtung (8) für den Gemüsekopf (7) vorgesehen ist und eine vertikal ausgerichtete Längsachse aufweist, entlang der es verschiebbar ist und dass sich das zweite Halteelement (6b) ebenfalls über der Positioniereinrichtung (8) befindet und parallel zur Längsachse verschiebbar ist.

12. Verfahren zum Trennen eines Strunks eines Gemüsekopfs (7) von einem Körper des Gemüsekopfs (7), umfassend folgende Schritte:
a) Festhalten des Strunks des Gemüsekopfs (7) durch ein erstes Halteelement (3b),
b) Festhalten des Körpers des Gemüsekopfs (7) durch ein zweites Halteelement (6b),
c) Verschieben der Halteelemente (3b, 6b) relativ zueinander, wobei der Strunk vom Körper getrennt wird.

13. Verfahren nach Anspruch 12, umfassend die folgenden Schritte:
a) Aufsetzen einer Schraube (3b) auf den im Wesentlichen entlang einer Längsachse ausgerichteten Strunk des Gemüsekopfs (7) und Einbohren der Schraube (3b) in den Strunk,
b) Fixieren des Körpers des Gemüsekopfs (7) durch das zweite Halteelement (6b), welches bevorzugt durch eine Auflagefläche, besonders bevorzugt eine Auflagefläche mit Haltestiften, gebildet wird;
c) Durchführen einer Relativbewegung der Halteelemente (3b, 6b) gegeneinander entlang der Längsachse, wobei der Strunk aus dem Körper herausgerissen wird.

14. Verfahren nach Anspruch 12 oder 13, **dadurch gekennzeichnet, dass** vorgängig auf den Strunk geschlagen wird.
